# EUROPÄISCHE PATENTSCHRIFT

(11) **EP 0 896 557 B1**
(45) Veröffentlichungstag und Bekanntmachung des Hinweises auf die Patenterteilung: **24.01.2007**
(21) Anmeldenummer: 98912373.2
(22) Anmeldetag: 23.02.1998
(51) Int. Cl.: B60C 27/12

(54) **SPANNSCHLOSS**
TENSIONING DEVICE
TENDEUR

(30) Priorität: 04.03.1997 DE 19708756
(43) Veröffentlichungstag der Anmeldung: 17.02.1999
(73) Patentinhaber: Weissenfels S.p.A., 33018 Fusine in Valromana UD (IT)
(72) Erfinder: FRANKLIN, Charles, R., I-33010 Fusine in Valromana (IT)
(74) Vertreter: Gotra, Stefano
(86) Internationale Anmeldenummer: PCT/EP1998/001027
(87) Internationale Veröffentlichungsnummer: WO 1998/039168

(56) Entgegenhaltungen:
- EP-A- 0 255 119
- FR-A- 2 435 633
- US-A- 4 188 061

## Beschreibung

Spannschloß für eine Gleitschutzkette, mit einem Gehäuse, das einen Betätigungshebel trägt, der eine Raststellung, in der ein zum Spannen durch eine Gehäuseöffnung in das Gehäuse hineinziehbarer Spannstrang entgegen seiner Spannrichtung blockierbar ist, sowie eine zweite Stellung aufweist, in der er aus dieser Blockierung freigebbar ist.

Solche Spannschlösser werden bei Gleitschutzketten eingesetzt, um beim Spannen des Kettennetzes nach der Montage einen unerwünschten Rücklauf des Spannorgans, das aus einem Kettenstrangabschnitt oder auch z.B. aus einem flexiblen Draht bestehen kann, entgegen der Spannrichtung zu vermeiden und so sicherzustellen, daß die in Zugrichtung bewirkten Versetzungen des Spannstrangs nicht wieder rückgängig gemacht werden können, d.h. daß der Spannstrang in der jeweils erreichten Spannposition gehalten wird.

Bei bekannten Spannschlössern wird der Spannstrang durch das Spannschloß hindurch- und über ein innerhalb des Gehäuses des Spannschlosses angebrachtes Umlenkelement geführt, wonach er aus dem Gehäuse des Spannschlosses wieder austritt und dort von dem Benutzer erfaßt werden kann, um die gewünschte Zugwirkung aufzubringen. Ist das Kettennetz gespannt, wird der aus dem Gehäuse auf der Ausziehseite heraushängende Abschnitt des Spannstrangs dann in geeigneter Weise in die äußere Seitenkette (meist unter Zwischenschaltung eines elastisch dehnbaren Gliedes am Ende des Spannstrangs) oder sonstwo auf der fahrzeugäußeren Seite der Kette in das Kettennetz eingehakt.

Ein solches bekanntes Spannschloß ist aus der EP-B-0 385 057 bekannt. Dort ist am Gehäuse ein Betätigungshebel vorgesehen, der mittels einer Feder in eine Raststellung hin vorgespannt ist und eine Rastnase aufweist, mit der er in der Raststellung in ein Glied des als Kettenstrang ausgebildeten Spannorganes eingreift, letzteres entgegengesetzt der Spannrichtung lagearretiert wird, während es bei einer Bewegung des Spannorgans in Spannrichtung infolge der speziellen Formgestaltung der Rastnase formschlüssig freigegeben wird. Somit ist eine Bewegung des Spannorganes durch das Spannschloß in Zugrichtung möglich, während entgegen der Zugrichtung eine automatische Blockierung erfolgt. Der Benutzer kann jedoch auf Wunsch durch Drücken des Betätigungshebels die Sperrung aufheben und damit einen freien Durchlauf des Spannorgans durch das Spannschloß hindurch ermöglichen, wenn z.B. zum Abbau der Kette die Spannung des Kettennetzes wieder aufgehoben werden soll.

Bei einem anderen bekannten Spannschloß (DE-A-40 39 665), das ebenfalls den gattungsgemäßen Aufbau aufweist, kann der Spannstrang über einen sich über die gesamte Höhe des Gehäuses des Spannschlosses erstreckenden Einführungsschlitz von der Seite her in das Gehäuse eingeführt werden, wodurch das Einbringen des Spannstranges in das Gehäuse erleichtert wird, während das Spannen des Kettennetzes in gleicher Weise wie bei dem zuvor beschriebenen bekannten Spannschloß erfolgt.

Weiterhin wird auf die gattungsgemäße EP-A-0 255 119 hingewiesen.

Bei diesen Spannschlössern muß das Aufbringen der Spannkraft auf das Spannorgan durch die Bedienungsperson manuell erfolgen, die entsprechend fest an dem aus dem Gehäuse herauslaufenden Ende des Spannstranges in Spannrichtung ziehen muß, bis die gewünschte verspannte Stellung des Kettennetzes auf dem Rad erreicht ist. Danach muß noch das auf der Zugseite heraushängende Ende des Spannstranges in geeigneter Weise auf der Außenseite des Kettennetzes ebenfalls unter Spannung befestigt werden, um schließlich insgesamt einen gespannten Sitz zu erhalten. Der Benutzer kann auf diese Weise zunächst zwar einen straffen Sitz der Kette unter Spannung auf dem Rad erreichen; wenn dann das Fahrzeug bewegt wird, setzt sich die Kette infolge der auftretenden Kräfte jedoch noch auf dem Radumfang, wodurch es zu einem Abbau der aufgebrachten Spannung kommt und nach einer gewissen Fahrstrecke daher ein erneutes Spannen des Spannstranges erforderlich wird. Nur so kann verhindert werden, daß es trotz eines anfänglichen festen Spannens infolge der eigenen Setzbewegungen der Kette zu einem lockeren Sitz derselben auf dem Rad mit allen damit verbundenen Nachteilen (wie unzureichende Wirkung, lautes Kettengeräusch beim Fahren, auch Gefahr von Beschädigungen der Kette oder anderer Fahrzeugteile durch lockere Kettenbestandteile) kommen kann.

Ausgehend hiervon liegt der Erfindung die Aufgabe zugrunde, ein Spannschloß vorzuschlagen, das eine erheblich einfachere Montage ermöglicht und bei dem sogar von einem Nachspannen der Kette nach einer anfänglichen Fahrstrecke abgesehen werden kann.

Erfindungsgemäß wird diese Aufgabe durch ein Spannschloß mit den Merkmalen des Anspruch 1 gelöst.

Bei dem erfindungsgemäßen Spannschloß wird der Spannstrang nicht mehr, wie bei den Spannschlössern nach dem Stand der Technik, durch das Gehäuse hindurchgeführt, damit er an seinem anderen, aus dem Gehäuse wieder herauslaufenden Abschnitt von der Bedienungsperson zum Spannen ergriffen werden kann. Vielmehr ist bei der Erfindung der Spannstrang innerhalb des Gehäuses des Spannschlosses an eine in Aufwickelrichtung vorgespannte Wickeleinrichtung angeschlossen. Da das Aufwickeln des Spannstranges in Richtung auf ein Hineinziehen des Spannstranges in das Spannschloß (und damit in Spannrichtung des Spannstranges) wirkt, ist der Spannstrang bei dem erfindungsgemäßen Spannschloß dauernd in Spannrichtung (Aufwickelrichtung) vorgespannt. Dadurch ist es nicht erforderlich, daß die Bedienungsperson zum Erreichen der gewünschten Spannung an einem Ende des Spannstranges ziehen muß: Es reicht vielmehr aus, daß das Spannschloß mit seinem Gehäuse in geeigneter Weise an einer entsprechenden Stelle des Kettennetzes auf der Radaußenseite befestigt ist, so daß der Spannstrang zur Montage nur noch (durch Überführen des Betätigungshebels in dessen zweite Stellung, in der keinerlei Blockierwirkung auf den Spannstrang mehr ausgeübt wird) aus dem Gehäuse so weit herausgezogen wird, bis sein freies Ende, das entsprechend mit einem Befestigungshaken oder einer sonstigen Befestigungseinrichtung versehen ist, an einer anderen vorgegebenen Stelle des Kettennetzes auf der Außenseite des Rades eingehakt werden kann. Ist dies erfolgt, muß nur noch der Betätigungshebel in seine Raststellung überführt werden (was vorteilhafterweise ganz einfach dadurch geschieht, daß der Betätigungshebel schon grundsätzlich in Richtung auf eine Einnahme seiner Raststellung vorgespannt ist, so daß er die Raststellung stets automatisch einnimmt, wenn er nicht manuell in eine andere Stellung gedrückt wird). In dieser Raststellung wird der Spannstrang unter Wirkung der Vorspannung der Aufwickeleinrichtung mit einer gewünschten Vorspannung in Spannrichtung gezogen, so daß es ohne weiteres Zutun des Benutzers der Kette zu dem gewünschten festen Sitz der Kette kommt. Wird das Fahrzeug anschließend bewegt, so wird infolge der fortbestehenden Vorspannung in Aufwickelrichtung der Spannstrang automatisch immer gespannt, wenn sich das Kettennetz auf dem Rad etwas setzt und dadurch eine Entspannung eintreten würde. Damit ist sichergestellt, daß der Spannstrang ohne das Erfordernis eines weiteren Nachspannens stets unter der gewünschten Spannung steht und das ganze Kettennetz damit immer in seiner straff gespannten Lage auf dem Rad gehalten wird.

Da zum Spannen des Kettennetzes nur der Spannstrang aus dem Gehäuse bis zum Einhaken an der dafür vorgesehenen Stelle des Kettennetzes herausgezogen werden muß und anschließend nur noch die (bevorzugt automatische) Überführung des Betätigungshebels in dessen Raststellung nötig ist, ist die hierfür erforderliche Betätigung durch den Benutzer ganz erheblich vereinfacht und wesentlich kürzer als bei bekannten Spannschlössern, bei denen auch der anschließende Spannvorgang noch eine zusätzliche Spannung des Spannstranges durch den Benutzer erfordert. Die Verwendung des erfindungsgemäßen Spannschlosses bei einer Gleitschutzkette bildet somit einen wesentlichen Fortschritt im Hinblick auf die schon lange und ganz allgemein gewünschte besonders einfache und rasche Gesamtmontage einer Gleitschutzkette am Rad.

Die Wickeleinrichtung innerhalb des Gehäuses kann in jeder geeigneten Form ausgebildet sein. Besonders bevorzugt ist als Wickeleinrichtung jedoch eine Wickelrolle vorgesehen. Diese kann in ihrer Gestaltung auch besonders gut auf die Form und Art des Spannstranges ausgelegt werden, um diesen beim Aufwickeln gut zu führen. So wird besonders bevorzugt die Wickelrolle mit einer in ihrem mittleren Axialabschnitt umlaufenden Formnut versehen, um den auf ihr aufgewickelten Spannstrang beim Aufwickeln axial zu führen. Besonders bevorzugt ist die Formnut dabei mit zueinander im Querschnitt V-förmig geneigten Seitenflanken versehen, durch die beim Aufwickeln auch gleichzeitig eine gewisse axiale Zentrierung des Spannstranges auf der Wickelwelle erreicht werden kann.

Die Wickelrolle kann aber auch mit Vorteil so ausgebildet sein, daß sie eine mittlere Wickelachse aufweist, die seitlich durch radial überstehende Flankenscheiben begrenzt wird.

Eine besonders bevorzugte Ausgestaltung der Erfindung besteht darin, daß die Wickeleinrichtung, insbesondere die Wickelrolle, konzentrisch auf einer Vorspanneinrichtung, vorzugsweise einer Vorspannfeder, sitzt. Vorteilhafterweise wird die Vorspannfeder als Spiralfeder ausgeführt, die besonders bevorzugt als spiralförmig verlaufende Blattfeder ausgebildet ist. Es kann jedoch für bestimmte Fälle auch vorteilhaft sein, wenn die Vorspannfeder als Torsionsfeder oder in Form einer gewundenen Schenkelfeder ausgebildet ist.

Eine besonders bevorzugte Ausgestaltung des erfindungsgemäßen Spannschlosses besteht darin, daß an der Wickeleinrichtung, insbesondere an der Wickelrolle, seitlich eine Verzahnung vorgesehen ist, die in der Raststellung des Betätigungshebels mit einem an diesem angebrachten oder von diesem gesteuerten Rastorgan in blockierenden Eingriff bringbar ist. Die Zahnform der Verzahnung kann in jeder geeigneten Weise gewählt werden, die sicherstellt, daß sie bei Rasteingriff mit dem Rastorgan die gewünschte Blockierung entgegen der Aufwickelrichtung gewährleistet; demgegenüber kann sich die Wickelrolle in Aufwickelrichtung sehr wohl drehen, indem dabei das Rastorgan durch geeignete Wahl der Eingriffsgeometrie von den Zähnen der Verrastung formschlüssig aus der Verraststellung angehoben wird, um ein Weiterdrehen freizugeben, jedoch stets beim folgenden Zahn wieder in die Verraststellung zurückkehrt, aus der es bei einem Weiterdrehen in Aufwickelrichtung wieder angehoben wird usw.

Wenn die Wickelrolle mit einer mittleren Mittelachse ausgeführt ist, die seitlich durch radial überstehende Flankenscheiben begrenzt wird, werden bevorzugt die Zähne der Verzahnung an einer der seitlichen Flankenscheiben direkt angebracht. Gleichermaßen kann es jedoch auch vorteilhaft sein, die Zähne auf einem neben der Wickelrolle koaxial mit dieser angebrachten Zahnrad auszubilden.

Für bestimmte Einsatzfälle kann es auch besonders vorteilhaft sein, wenn die Vorspannung der Wickeleinrichtung einstellbar ist, allerdings nur insoweit, als die Vorspannung dabei nicht unter einen minimalen Wert absinkt, der auf jeden Fall zum Aufbringen einer ausreichenden Vorspannung erforderlich ist.

Bevorzugt wird bei dem erfindungsgemäßen Spannschloß vorgesehen, daß der Betätigungshebel noch in eine dritte Stellung bringbar ist, in der der Spannstrang in beiden Strangrichtungen blockiert ist: Diese Stellung ist insbesondere dann von Vorteil, wenn der Benutzer den Spannstrang z.B. aus dem Gehäuse herausgezogen hat, ihn aber nicht sofort in die Gegenaufnahme einhängen kann, weil er diese z.B. erst noch in eine richtige Einhaklage bringen muß o.ä. In diesem Fall ist es günstig, wenn der Benutzer durch den Betätigungshebel den Spannstrang in dessen herausgezogener Stellung blockieren kann, so daß er auch nicht automatisch durch die vorgespannte Aufwickeleinrichtung wieder in das Gehäuse zurückgezogen wird. Der Benutzer kann hier den herausgezogenen Strang auch kurzfristig aus der Hand legen, um andere Handlungen vornehmen zu können, wonach er den Spannstrang zum gewünschten Zeitpunkt einhaken und anschließend den Betätigungshebel aus seiner dritten Stellung lösen und damit das Spannschloß auf selbsttätiges Spannen des Spannstrangs umstellen kann.

Eine besonders bevorzugte Ausgestaltung des erfindungsgemäßen Spannschlosses besteht dabei auch darin, daß der Betätigungshebel nicht direkt auf die Aufwickeleinrichtung wirkt, sondern vielmehr mit einem relativ zu ihm beweglichen, ebenfalls im Gehäuse verschwenkbar gelagerten Verrastungshebel zusammenwirkt, der seinerseits mit einem Rastorgan versehen ist, mit dem er in der Raststellung des Betätigungshebels mit der Verzahnung in Eingriff steht. Der Betätigungshebel kann dabei von der Gehäuseaußenseite her vom Benutzer in seine drei Stellungen verbracht werden, wobei er in seiner Raststellung den Verrastungshebel in Rasteingriff mit der Verzahnung drückt. Hierdurch wird in einfacher Weise eine Dreistellungs-Einstellmöglichkeit für den Betätigungshebel geschaffen, während der Verrastungshebel, der das eigentliche Verrastungsorgan bildet, nur in zwei Stellungen (nämlich in die Raststellung einerseits und eine Freigabestellung andererseits) überführt werden muß. Es ist auf diese Weise möglich, durch Einsatz einer geeigneten Kinematik in der gegenseitigen Zuordnung der beiden Hebel die Umschaltung des Betätigungshebels in seine drei verschiedenen Positionen mit relativ kleinen Schaltwegen zu ermöglichen, während der Verrastungshebel - unabhängig von den Schaltwegen des Betätigungshebels - spezifisch nur für das Aus- und Einrasten mit der zugeordneten Verzahnung ausgebildet ist.

Ganz besonders bevorzugt werden die beiden Hebel so ausgeführt und angeordnet, daß der Betätigungshebel den Verrastungshebel, von der Gehäuseaußenseite her gesehen, bügelförmig überdeckt, so daß von der Gehäuseaußenseite her der Verrastungshebel nicht einsehbar und nur über den Betätigungshebel, nicht aber sonstwie, manipulierbar ist.

Wenn der Betätigungshebel den Verrastungshebel bügelförmig überdeckt, werden bevorzugt beide Hebel in ihrem Mittelbereich jeweils um eine (eigene) Kippachse verschwenkbar am Gehäuse gelagert. Der Abstand der beiden Kippachsen wird dabei so gewählt, daß die gewünschte Kinematik sowohl hinsichtlich der Betätigung des Betätigungshebels durch den Benutzer, wie auch in bezug auf die gegenseitige Zuordnung der beiden Hebel zueinander erreicht wird.

Bevorzugt ist der Verrastungshebel in geeigneter Weise in die Eingriffsstellung seines Rastorgans mit der Verzahnung, also in die Raststellung hin, vorgespannt.

Dabei wird ganz besonders bevorzugt der Betätigungshebel auf seiner dem Verrastungshebel zugewandten Seite mit zwei beidseits seiner Kippachse vorgesehenen Vorsprüngen versehen, mit deren einem der Verrastungshebel in der Freigabestellung des Betätigungshebels außer Eingriff mit der Verzahnung verschwenkt und mit deren anderem in der dritten Stellung des Betätigungshebels der Verrastungshebel in seiner Raststellung, in der das Rastorgan in Eingriff mit der Verzahnung steht, lageblockiert wird. Diese Blockierung sorgt dafür, daß der Spannstrang in keiner seiner beiden Richtungen bewegt werden kann, da auch bei einem Zug in Aufwickelrichtung das Rastorgan nicht mehr formschlüssig durch die Verzahnung in seine Freigabestellung für die Drehung angehoben werden kann.

Ganz besonders bevorzugt wird der Betätigungshebel mit einer Rasteinrichtung versehen, mit der er in jeder seiner drei Einstellpositionen mit dem Gehäuse (lösbar) verrastbar ist. Dadurch wird dem Benutzer die Handhabung erleichtert, da er beim Verschwenken des Betätigungshebels unschwer bemerkt, wenn er eine der drei Raststellungen und damit eine der drei möglichen Einstellpositionen erreicht hat. Dies erfolgt bevorzugt dadurch, daß der Betätigungshebel auf seiner dem Verrastungshebel zugewandten Seite an seinem einen Ende mit einem bogenförmig in Verschwenkrichtung in das Gehäuse hinein vorspringenden Steg versehen ist, welcher Ausnehmungen aufweist, die so ausgebildet und angeordnet sind, daß bei Erreichen jeder der drei Kippstellungen des Betätigungshebels eine der Ausnehmungen mit einer gehäusefesten Wulst in lösbaren Rasteingriff gelangt.

Bei einer besonders bevorzugten Ausgestaltung des erfindungsgemäßen Spannschlosses wird als Spannstrang ein flexibles Stahlseil eingesetzt, das vorteilhafterweise mit einer Kunststoffummantelung versehen ist.

Das erfindungsgemäße Spannschloß ist gegenüber den bekannten Spannschlössern hinsichtlich seiner Funktionalität deutlich verbessert, da auch während der Fahrt laufend ein selbsttätiges Nachspannen erfolgt, wobei unabhängig von der Beanspruchung der Kette nahezu die gleiche Spannkraft am Spannelement wirkt, so daß ein paßgenauer Sitz der Kette am Fahrzeugrad ungeachtet der auftretenden Belastungen, die auf die Kette wirken, gewährleistet wird. Eine unerwünschte Lockerung des Kettensitzes während der Fahrt kann dabei nicht auftreten. Das erfindungsgemäße Spannschloß kann auf der Außenseite des Rades an der Kette allein oder auch zweifach vorgesehen werden, um die gewünschte Spannwirkung an einer oder zwei Spannstellen zu erreichen.

Die Erfindung wird nachfolgend anhand der Zeichnung im Prinzip beispielshalber noch näher erläutert. Es zeigen:
Fig. 1 eine perspektivische Prinzipdarstellung eines erfindungsgemäßen Spannschlosses mit abgenommenem Gehäusedeckel;
Fig. 2 das Spannschloß aus Fig. 1, jedoch in Explosionsdarstellung und ohne Spannstrang;
die Fig. 3, 4 und 5 eine Seitenansicht des Spannschlosses aus Fig. 1, jedoch mit abgenommenem Deckel und mit einer Schnittdarstellung des Betätigungs- und des Verrastungshebels, wobei Fig. 3 die Raststellung, Fig. 4 die Stellung mit völliger Freigabe der Bewegung des Spannstrangs und Fig. 5 die Blockierstellung, in welcher der Spannstrang in beiden Zugrichtungen blockiert ist, darstellen, und
Fig. 6 die Seitenansicht einer auf einen Reifen montierten Reifen-Gleitschutzkette, die mit zwei erfindungsgemäßen Spannschlössern ausgerüstet ist.

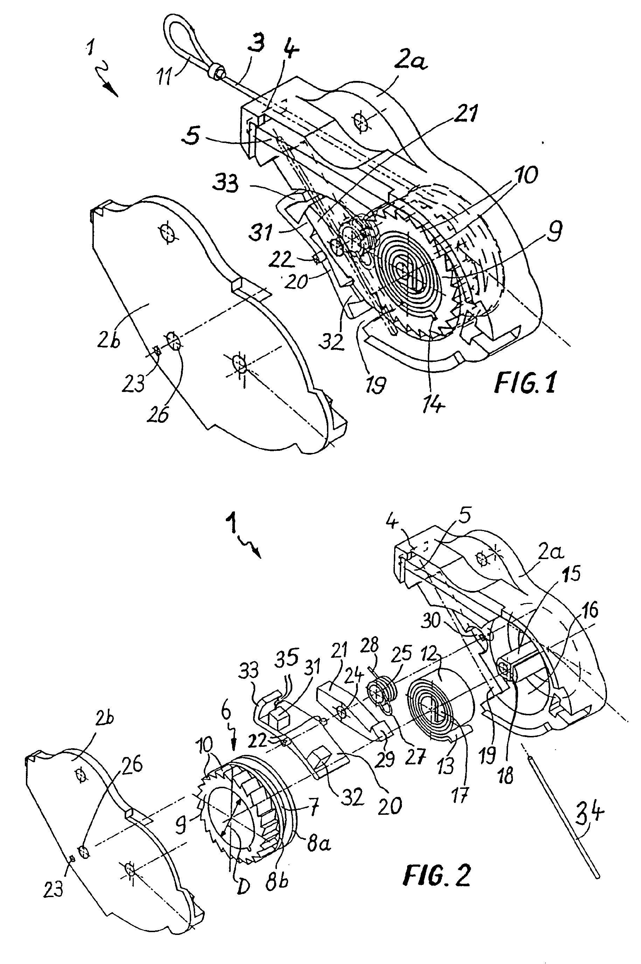

In den Fig. 1 und 2 ist ein Spannschloß 1 mit einem aus zwei Gehäuseteilen 2a und 2b bestehenden Gehäuse gezeigt, wobei, wie aus Fig. 1 besonders gut ersichtlich, das Gehäuseteil 2a alle wesentlichen bewegten Elemente des Spannschlosses trägt, während das Gehäuseteil 2b nur als ein seitlich ansetzbarer Deckel ausgebildet ist.

Die Darstellung der Fig. 1 zeigt in einer schrägen seitlichen Perspektivansicht das Spannschloß mit abgenommenem Gehäusedeckel 2b, während in Fig. 2 eine Explosivdarstellung des ganzen Spannschlosses wiedergegeben ist.

Wie Fig. 1 entnehmbar ist, läuft ein Spannstrang 3 durch eine verdeckte, in den Fig. 1 und 2 nur gestrichelt angegebene Öffnung 4 in einen Führungskanal 5 des Gehäuses hinein, durch diesen hindurch und wird an dessen Ende auf eine Wickelrolle 6 (vgl. Fig. 2) aufgewickelt. Diese Wickelrolle 6 besteht aus einer mittleren Wickelachse 7, die seitlich durch radial überstehende Flankenscheiben 8a und 8b begrenzt wird, wobei die einander zugewandten Seitenflanken der Seitenscheiben 8a und 8b zueinander radial schräg ausgerichtet sind und zwar derart, daß sie vom Drehmittelpunkt aus radial nach außen divergieren.

Wie aus der Explosionsdarstellung der Fig. 2 deutlich wird, ist auf der dem Gehäusedeckel 2b zugewandten axialen Seite der Wickelrolle 6 direkt neben der dort liegenden Seitenscheibe 8b ein Zahnring 9 mit einer Verzahnung aus sägezahnförmig angeordneten Außenzähnen 10 angebracht, wobei die Verbindung zwischen dem Zahnring 9 und der Wickelrolle 6 in jeder geeigneten Form erfolgen kann. Beides kann als ein Kunststoff-Spritzteil einstückig ausgeführt sein, es kann sich jedoch auch um getrennte Teile handeln, die durch Verklebung oder auch durch z.B. Schrauben aneinander befestigt sind.

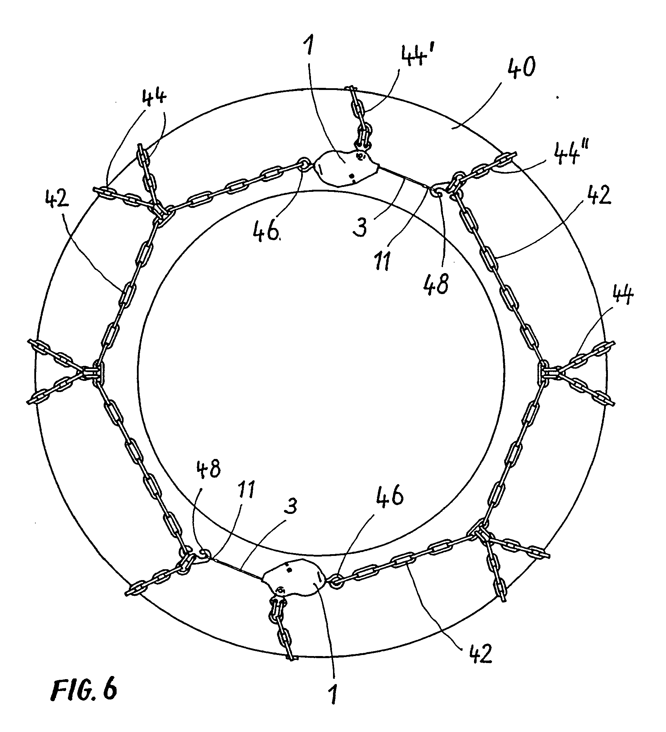

Der Spannstrang 3 ist an seinem aus dem Gehäuse herausragenden Ende mit einer Schlaufe 11 versehen, mit der er in geeignete Anhakelemente 48 (Fig. 6) am Kettennetz zu dessen Spannung eingehakt werden kann.

Die Wickelrolle 6 und der mit ihr verbundene Zahnring 9 sind mit einem Innendurchmesser *D* ausgestattet, der so groß gewählt ist, daß in ihm eine spiralförmig gewickelte Vorspann-Blattfeder 12 Platz findet, die an ihrem äußeren Ende über einen abgekanteten Endabschnitt 13 in einen entsprechenden Axialschlitz 14 am Innenumfang des aus Wickelrolle 6 und Zahnring 9 bestehenden Teiles eingreift, wodurch eine Fixierung des radial äußeren Endes dieser Blattfeder 12 gegenüber der Wickelrolle 6 und dem Zahnring 9 erfolgt.

Das aus Wickelrolle 6 und Zahnring 9 bestehende Bauteil mit der konzentrisch innenliegenden Blattfeder 12 sitzt gemeinsam auf einem Achsbolzen 15 des Gehäuses 2a, der von diesem in Richtung auf das Gehäuseteil 2b axial vorspringt. Um den Achsbolzen 15 herum ist im Gehäuseteil 2a eine Aufnahmeöffnung 16 ausgebildet, innerhalb derer die Anordnung aus Wickelrolle 5, Zahnring 9 und Blattfeder 12 gut Platz findet und darin unbehindert verdreht werden kann.

Der radial innenliegende, umgebogene Endbereich 17 der Blattfeder 12 ist im eingebauten Zustand derselben in einen axialen Aufnahmeschlitz 18 des Achsbolzens 15 eingesteckt, so daß die Spiralfeder 12 mit ihrem inneren Ende 17 durch dessen Formschluß mit dem Aufnahmeschlitz 18 dem Achsbolzen 15 gegenüber ebenfalls festgelegt ist.

Auf der bei den Darstellungen der Fig. 1 und 2 unteren Gehäuseseitenwand des Gehäuseteiles 2a ist in dieser eine Ausnehmung 19 vorgesehen, in der (im zusammengebauten Zustand) ein Betätigungshebel 20 angeordnet ist. Im eingebauten Zustand übergreift der Betätigungshebel 20 bügelförmig einen Verrastungshebel 21.

Der Betätigungshebel 20 weist etwa in seiner Mitte zwei seitliche Rundvorsprünge 22 auf, die im eingebauten Zustand jeweils in eine entsprechende Lageröffnung in der Seitenwand des zugeordneten Gehäuseteiles eingreifen, so in die Lageröffnung 23 im Gehäuseteil 2b (die entsprechende Lageröffnung im Gehäuseteil 2a ist infolge der perspektivischen Darstellung der Fig. 1 und 2 nicht dargestellt).

Der Verrastungshebel 21 weist in seinem Mittelteil eine axiale Öffnung 24 auf, mit der er auf einem (nicht dargestellten) Querstift zusammen mit einer auf seiner dem Gehäusedeckel 2b abgewandten Seite angeordneten Vorspann-Spiralfeder 25 in den Gehäuseteilen 2a und 2b gelagert ist. Die Lagerung im Gehäusedeckel 2b erfolgt über eine Lageröffnung 26, während die Lageröffnung im Gehäuseteil 2a wiederum (wegen der perspektivischen Verdeckung) nicht gezeigt ist. Das radial äußere Ende 27 der Spiralfeder 25 ist axial um 90° umgebogen (mit einem verlängerten Endschenkel) und ist im eingebauten Zustand in geeigneter Weise mit dem Verrastungshebel 21 fest verbunden (etwa durch Einführen in einen entsprechenden, in den Figuren nicht dargestellten, weil verdeckten, seitlichen Schlitz auf der der Spiralfeder 25 zugewandten Seitenfläche des Verrastungshebels 21). Mit ihrem anderen freien Endbereich 28 ist die Spiralfeder 25 in geeigneter Weise (in den Figur nicht im einzelnen dargestellt) gehäusefest fixiert.

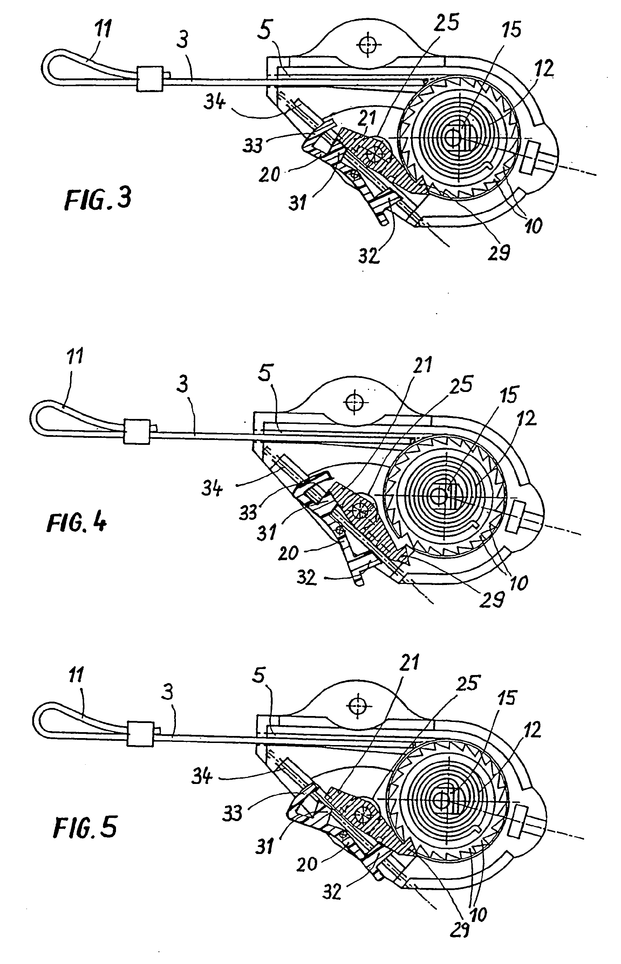

Im eingebauten Zustand ist die Spiralfeder 25 so vorgespannt, daß sie den Verrastungshebel 21 in Richtung auf dessen Rasteingriff mit dem Zahnring 9 drückt. Zu diesem Zweck hat der Verrastungshebel 21 am Ende seines dem Zahnring 9 zugewandten Hebelarmes eine vorspringende Rastnocke 29, die einstückig an ihm ausgebildet ist und eine geeignete Form aufweist, um mit den Zähnen 10 des Zahnrings 9 in Rasteingriff treten zu können, wie dies in den Figuren 3 und 5 dargestellt ist.

Die Spiralfeder 25 sitzt in einer im Gehäuseteil 2a vorgesehenen speziellen Aussparung 30, in der sie in geeigneter Weise verschwenkbar gehaltert wird (etwa durch einen nicht gezeigten von der Seitenwand des Gehäusesteiles 2a vorragenden Achsbolzen).

Der Betätigungshebel 20 ist auf seiner dem Verriegelungshebel 21 zugewandten Unterseite beidseits seiner Kippachse 22 mit jeweils einem im Abstand zu dieser angebrachten Vorsprung 31 bzw. 32 versehen. Diese Vorsprünge dienen, wie das noch weiter unten näher ausgeführt wird, dazu, sich gegen die zugewandte Seite des Verrastungshebels 21, je nach Schwenkstellung des Betätigungshebels 20, anzulegen, um gewisse Verschwenkrichtungen dieses Verrastungshebels 21 zu sperren oder diesen gar in eine bestimmte Stellung zu drücken.

An seinem einen Ende weist der Betätigungshebel 20 einen bogenförmig in Verschwenkrichtung in das Gehäuse hin vorspringenden Steg 33 auf, der auf seiner dem Gehäusedeckel 2b abgewandten Seite mit verschiedenen Ausnehmungen 35 versehen ist, die es im eingebauten Zustand ermöglichen, daß der Steg 33 mit einer im Gehäuse gehäusefest angebrachten Wulst (bei der Darstellung der Figuren 1 und 2 ist diese Wulst in Form einer kleinen, im Gehäuse angeordneten Metallstange 34 ausgebildet) in Rasteingriff treten kann, und zwar derart, daß in jeder der drei Einstellpositionen des Betätigungshebels 20 eine Verrastung mit der Wulst 34 auftritt.

Bei der in Fig. 1 gezeigten Darstellung liegt der Vorsprung 31 des Betätigungshebels 20 gegen die zugewandte Oberfläche des Verrastungshebels 21 an, wobei gleichzeitig die Rastnocke 29 des Verrastungshebels 21 in die Verzahnung 10 verrastend eingreift. Damit befindet sich bei der Stellung nach Fig. 1 der Betätigungshebel in seiner sogenannten "Raststellung", in die hin er durch die Spiralfeder 25 vorgespannt ist.

Diese Raststellung ist noch einmal deutlicher in Fig. 3 gezeigt, wobei hier zur besseren Übersichtlichkeit der Betätigungshebel 20 und der Verrastungshebel 21 als Schnittdarstellung angegeben sind. Wie daraus erkennbar, ist in dieser ersten, der sogenannten *"Raststellung",* der Betätigungshebel 21 so gekippt, daß sein Vorsprung 31 gegen die zugewandte Oberfläche des Verrastungshebels 21 anliegt, während dieser an seinem gegenüberliegenden Ende mit seinem Rastorgan 29 in die Verzahnung 10 verrastend eingreift. Der zweite Vorsprung 32 am Betätigungshebel 20 befindet sich in dieser Stellung in einem Abstand von der zugewandten Oberfläche des Verrastungshebels 21. Dieser Abstand ist so groß, daß der Betätigungshebel 21, der unter Wirkung der Spiralfeder 25 in diese Raststellung hin vorgespannt ist, bei einer Verdrehung der Verzahnung in Aufwickelrichtung des Spannstranges 3 (also bei der zeichnerischen Darstellung: eine Verdrehung im Uhrzeigersinn) durch Formschluß aus seiner Raststellung (ebenfalls im Uhrzeigersinn) herausgeschwenkt werden kann, so daß der folgende Zahn der Verzahnung 10 unter ihm hindurchlaufen kann, wonach der Verrastungshebel 21 wieder in die Raststellung einschnappt, aus der er bei einer fortgesetzten Drehung in Aufwickelrichtung wieder herausgeführt wird usw.

In Fig. 4 ist nun die Stellung des Spannschlosses 1 gezeigt, in welcher der Spannstrang 3 in seinen beiden Bewegungsrichtungen völlig frei bewegt werden kann. In dieser zweiten, der sogenannten *"Freigabestellung",* ist der Betätigungshebel bei der zeichnerischen Darstellung noch etwas weiter im Uhrzeigersinn als bei der Darstellung aus Fig. 3 verklappt, wodurch infolge der Anlage des Vorsprungs 31 auf der diesem zugewandten Seitenfläche des Verrastungshebels 21 der letztere aus seiner Verrastungsstellung mit der Verzahnung 10 herausgekippt wird, wie dies Fig. 4 zeigt. Damit ist die Verzahnung 10 (und die mit ihr verbundene Aufwickelrolle 6) frei, nach beiden Drehrichtungen hin verdreht werden zu können, so daß in dieser Stellung der Benutzer die Möglichkeit hat, das Spannorgan 3 so weit, wie er dies wünscht, aus dem Gehäuse herausziehen zu können. In dieser Stellung wird der Verriegelungshebel 21 jedoch unter Wirkung der Vorspannfeder 25 in Richtung auf die Raststellung, die in Fig. 3 gezeigt ist, hin vorgespannt. Durch die Verrastung des Betätigungshebels 20 über dessen seitliche Ausnehmungen 31 an der gehäusefesten Wulst 34 wird er jedoch in jeder seiner drei Einstellungen verrastend gehalten, so daß die Bedienungsperson auch in der Freigabestellung den Betätigungshebel 20 loslassen kann, ohne daß dadurch der Verrastungshebel 21 unter Wirkung, der Vorspannungsfeder 25 in seine Raststellung automatisch zurückkehrt. Um dies zu bewirken, muß der Benutzer den Betätigungshebel 20 zuerst aus der Freigabestellung lösen, wonach dann erst die Betätigungsfeder 25 das Eindrücken des Verrastungshebels 21 in dessen Raststellung bewirken kann.

Fig. 5 zeigt schließlich die dritte Einstellmöglichkeit des Betätigungshebels 20, bei der dieser entgegen dem Uhrzeigersinn am stärksten in das Gehäuse eingedrückt ist. In dieser Stellung liegt nun der andere Vorsprung 32 des Betätigungshebels 20 auf der ihm zugewandten Oberfläche des Verrastungshebels 21 an, so daß die Raststellung des letzteren, in der er sich gerade befindet, formschlüssig blockiert wird. In dieser Blockierstellung ist es auch bei einem Verdrehen der Verzahnung 10 in Aufwickelrichtung (also bei der zeichnerischen Darstellung: im Uhrzeigersinn) nicht mehr möglich, den Verriegelungshebel 20 aus seiner Raststellung durch die schrägen Zahnflanken anzuheben, damit diese unter ihm durchlaufen können. Vielmehr verbleibt das Rastorgan 29 des Verrastungshebels 21 in blockierendem Eingriff mit der Verzahnung 10, wodurch eine völlige Drehblockierung der Wickelrolle 6 erreicht wird. In dieser Stellung ist es weder möglich, den Spannstrang 3 aus dem Gehäuse herauszuziehen, noch kann er durch die Aufwickeleinrichtung in das Gehäuse hineingezogen werden.

Bei der Montage wird das Seil bei dem dargestellten Spannschloß 1 durch Druck auf den Hebel 20 auf die in Fig. 4 gezeigte Freigabestellung zum Herausziehen freigegeben und soweit ausgezogen werden, bis das Einhaken der Befestigungsschlaufe 11 an einer entsprechenden Befestigungsstelle 48 (Fig. 6) möglich ist. Anschließend wird vom Benutzer der Hebel 20 in dessen Mittelstellung (Raststellung) gekippt, in welcher der Spannstrang 3 unter der Vorspannwirkung der Feder 12 steht, während er in Gegenrichtung arretiert ist. In dieser Stellung wird der Spannstrang 3 unter Druck der Vorspannfeder 12 so weit wie möglich in das Gehäuse 2 hineingezogen. Tritt beim anschließenden Fahren des Fahrzeugs eine Lockerung der Kettenspannung ein, wird der Spannstrang 3, also das Spannseil, sogleich in Aufwickelrichtung unter der weiterhin wirkenden Vorspannung der Spannfeder 12 nachgezogen.

Hierdurch ist eine sehr einfache und rasche Montage der Kette möglich, ohne daß nach dem Anfahren das Fahrzeug noch einmal zu einem Nachspannen angehalten werden müßte.

Das erfindungsgemäße Spannschloß bietet aber auch noch den Vorteil, daß es eine größere Anpassungsfähigkeit der mit ihm versehenen Ketten an die Reifen, auch im Hinblick auf deren unterschiedliche Abmessungen, ermöglicht. So läßt sich dieses Spannschloß auf Schneeketten mit normaler Innenkette in Form einer Folge von Kettenringen ebenso montieren wie auf Schneeketten, deren Innenkette einen flexiblen Bügel aufweist. Auch Schneeketten, deren Innenkette aus Metallseil besteht, oder auf Schneeketten in Form zusammengesetzter Elemente ist die Anwendung des Spannschlosses möglich. Gleichermaßen läßt sich das Spannschloß auch für Ketten für Lastkraftwagen, Nutzfahrzeuge oder andere Fahrzeugtypen einsetzen.

Das Gehäuse des Spannschlosses 1 kann aus jedem geeigneten Material, z.B. aus Stahlblech, gefertigt werden, besonders bevorzugt besteht es jedoch aus einem geeigneten Kunststoff als Spritzgußteil, wodurch auch die einteilige Ausbildung komplizierterer Gehäuseinnenformgebungen erreichbar ist. Die Wickelrolle 6 und die Verzahnung 10 können ebenso wie die verschiedenen Hebel 20, 21 aus geeignetem Kunststoff gefertigt sein, es kommt jedoch, insbesondere für die Wickelrolle 6 und für die Verzahnung 10 auch eine Herstellung aus Metall in Frage.

Die Fig. 6 zeigt eine Schneekette, die mit den in den Figuren 1 bis 5 dargestellten Spannschlössern 1 ausgerüstet und auf einem Reifen 40 montiert ist, wobei die Fig. 6 einen Blick auf die montierte Schneekette von der Reifenaußenseite her wiedergibt.

Die Kette weist auf der Außenseite einen äußeren Halterungsstrang 42 und (in der Zeichnung nicht dargestellt, weil verdeckt) auf der Innenseite des Rades ebenfalls einen Seitenstrang als seitliche Halterung auf, der dort jedoch in Form eines umlaufenden flexiblen Stahldrahtbügels ausgebildet ist, dessen Enden über einen üblichen Einhakverschluß miteinander verhakt sind. Diese innere Seitenhalterung und der äußere Seitenstrang 42 sind durch Kettenstrangabschnitte 44, die über die Reifenlauffläche führen, miteinander verbunden, wie dies in Fig. 6 dargestellt ist.

Die äußere Seitenkette besteht, wie Fig. 6 deutlich zeigt, aus zwei Strangabschnitten 42, deren jeder an einem seiner Enden über ein Verbindungsglied 45 mit einem Strangabschnitt 44", der dort über die Lauffläche des Reifens 40 verläuft, verbunden ist. Dieses Verbindungsglied 45 ist mit einem vorragenden Haken 48 versehen, in welchen die Schlaufe 11 eines Spannorgans 3 eingehakt ist, das aus einem Spannschloß 1 der in den Figuren 1 bis 5 gezeigten Art herausläuft und in diesem Spannschloß 1 unter einer Aufwickelvorspannung steht. Das Spannschloß 1 ist seinerseits über eine Öse 46 mit dem zweiten Ende eines der beiden seitlichen Halterungsstränge 42 verbunden und zudem an einer über die Reifenlauffläche des Reifens 40 verlaufenden Querkette 44' gelenkig befestigt, wie dies aus Fig. 6 ersichtlich ist.

Auf diese Weise sind die beiden Strangabschnitte 42 des äußeren Seitenstranges der Gleitschutzkette an ihren beiden Enden jeweils über Spannschlösser 1 und die aus diesen herausgezogenen, unter Aufwickelvorspannung stehenden Spannstränge 3 miteinander verbunden. Infolge der auf jeden Spannstrang 3 in Aufwickelrichtung wirkenden Vorspannung werden die Haken 48 am gegenüberliegenden Ende des anderen Kettenstrangabschnitts unter einer vorgegebenen Zugspannung zu dem zugeordneten Spannschloß 1 hin gezogen, wodurch das gesamte Kettennetz gespannt und im Sitz straff gehalten wird.

Durch die gezeigte Anordnung von zwei Spannschlössern 1 läßt sich für die Montage bzw. Demontage die Gleitschutzkette auf ihrer Vorderseite so öffnen, daß die beiden Kettenstrangabschnitte 42 der äußeren Seitenkette unabhängig voneinander mit den an ihnen jeweils befestigten Querketten 44 und 44' bzw. 44" ohne Behinderung über den jeweiligen Abschnitt der Lauffläche des Reifens 40 geführt werden können. Hierzu ist es nur erforderlich, die Schlaufen 11 aus den zugeordneten Befestigungshaken 48 auszuhängen (zur Demontage) bzw. nach der Anfangsmontage dort einzuhängen und anschließend durch Einstellung des Betätigungshebels in dessen Rastposition die Vorspannung auf den Spannstrang 3 aufzubringen.

Die gezeigte Kettenkonstruktion läßt eine rasche und einfache Montage bzw. Demontage der Schneekette zu. Soll die Schneekette montiert werden, wird zunächst die innere Seitenhalterung (auf der in Fig. 6 nicht gezeigten Seite des Reifens 40) über die Reifenlauffläche gestülpt und dann deren freie Enden über den angebrachten Verschluß miteinander verbunden. Anschließend können die beiden seitlichen und voneinander getrennten Strangabschnitte 42 der äußeren Seitenkette über die Reifenfläche nach vorne geführt werden, wonach der Benutzer beide Spannschlösser 1 in der Form betätigt, daß er den Betätigungshebel in Freigabestellung führt, in der er den Spannstrang 3 aus dem Spannschloß 1 so weit herausziehen kann, bis die Schlaufe 11 in den zugeordneten Haken 48 eingehakt werden kann, wonach der Betätigungshebel in seine Raststellung zurückgeführt und anschließend die gewünschte Vorspannung auf das Spannorgan 3 ausgeübt wird. Ist dies bei beiden Spannschlössern 1 durchgeführt, spannt sich die Kette selbsttätig und auch automatisch während der Fahrt nach.

Will man die gezeigte Kette wieder demontieren, wird bei jedem Spannschloß 1 zunächst der Betätigungshebel 20 wieder in seine Freigabestellung überführt und der Spannstrang 3 so weit aus dem Spannschloß 1 herausgezogen, daß ein einfaches Aushaken der Schlaufe 11 aus dem Gegenhaken 48 erfolgen kann. Danach besteht die Möglichkeit, daß der Benutzer z.B. den Betätigungshebel jedes Spannschlosses 1 in dessen Blockierstellung überführt, in der der Spannstrang 3 in der herausgezogenen Stellung völlig blockiert wird, so daß er auch nicht unerwünscht in das Gehäuse des Spannschlosses 1 zurückläuft. In jedem Fall kann aber durch eine geeignete Ausbildung der Schlaufe 11 oder durch Anbringen eines zusätzlichen Stopelementes hinter der Schlaufe 11 sichergestellt werden, daß auch im Falle der Einwirkung einer Vorspannung auf das Spannorgan 3 nach dem Aushaken der Schlaufe 11 ein unerwünschtes Hineinlaufen der Schlaufe 11 in das Gehäuse des Spannschlosses 1 nicht möglich ist.

## Patentansprüche

1. Spannschloß (1) für eine Gleitschutzkette, mit einem Gehäuse (2a, 2b), das einen Betätigungshebel (20) trägt, der eine Raststellung, in welcher ein zum Spannen durch eine Gehäuseöffnung (4) in das Gehäuse (2a,2b) hineinziehbarer Spannstrang (3) entgegen seiner Spannrichtung blockierbar ist, sowie eine Freigabestellung aufweist, in der der Spannstrang (3) aus dieser Blockierung freigebbar ist, wobei der Spannstrang (3) innerhalb des Gehäuses (2a,2b) an eine in Aufwickelrichtung vorgespannte Wickeleinrichtung (6,9,12) angeschlossen ist, **dadurch gekennzeichnet, dass** der Betätigungshebel (20) noch in eine dritte Stellung bringbar ist, in der er den Spannstrang (3) in beiden Strangrichtungen blockiert.

2. Spannschloß nach Anspruch 1, **dadurch gekennzeichnet, daß** die Wickeleinrichtung eine Wickelrolle (6) ist.

3. Spannschloß nach Anspruch 2, **dadurch gekennzeichnet, daß** die Wickelrolle (6) konzentrisch auf einer Vorspannfeder (12) sitzt.

4. Spannschloß nach Anspruch 3, **dadurch gekennzeichnet, daß** die Vorspannfeder eine Spiralfeder (12) ist.

5. Spannschloß nach Anspruch 4, **dadurch gekennzeichnet, daß** die Spiralfeder als spiralförmig verlaufende Blattfeder (12) ausgebildet ist.

6. Spannschloß nach Anspruch 3, **dadurch gekennzeichnet, daß** die Vorspannfeder eine Torsionsfeder ist.

7. Spannschloß nach Anspruch 3, **dadurch gekennzeichnet, daß** die Vorspannfeder in Form einer gewundenen Schenkelfeder ausgebildet ist.

8. Spannschloß nach einem der Ansprüche 2 bis 7, **dadurch gekennzeichnet, daß** an der Wickelrolle (6) seitlich eine Verzahnung (10) angebracht ist, die in der Raststellung des Betätigungshebels (20) mit einem an diesem angebrachten oder von diesem gesteuerten Rastorgan (29) in blockierendem Eingriff bringbar ist.

9. Spannschloß nach Anspruch 8, **dadurch gekennzeichnet, daß** die Zähne (10) der Verzahnung sägezahnförmig ausgebildet sind.

10. Spannschloß nach Anspruch 8 oder Anspruch 9, **dadurch gekennzeichnet, daß** die Wickelrolle (6) eine mittlere Wickelachse (7) aufweist, die seitlich durch radial überstehende Flankenscheiben (8a,8b) begrenzt wird.

11. Spannschloß nach Anspruch 10, **dadurch gekennzeichnet, daß** die Zähne (10) der Verzahnung an einer der seitlichen Flankenscheiben (8b) angebracht sind.

12. Spannschloß nach Anspruch 10, **dadurch gekennzeichnet, daß** die Verzahnung (10) auf einem neben der Wickelrolle (6) koaxial mit dieser angebrachten Zahnrad (9) ausgebildet sind.

13. Spannschloß nach einem der Ansprüche 1 bis 9, **dadurch gekennzeichnet, daß** die Wickelrolle (6) mit einer in ihrem mittleren Axialbereich umlaufenden Formnut zur axialen Führung des auf ihr aufgewickelten Spannstranges (3) versehen ist.

14. Spannschloß nach Anspruch 13, **dadurch gekennzeichnet, daß** die Formnut mit zueinander im Querschnitt V-förmig geneigten Seitenflanken versehen ist.

15. Spannschloß nach einem der Ansprüche 1 bis 14, **dadurch gekennzeichnet, daß** die Vorspannung der Wickeleinrichtung (6) einstellbar ist.

16. Spannschloß nach Anspruch 1 in Verbindung mit einem der Ansprüche 8 bis 12, **dadurch gekennzeichnet, daß** der Betätigungshebel (20) mit einem relativ zu ihm beweglichen Verrastungshebel (21) zusammenwirkt, wobei beide Hebel (20,21) am Gehäuse (2a,2b) verschwenkbar gelagert sind und der Verrastungshebel (21) mit einem Rastorgan (29) versehen ist, mit dem er in einer Raststellung mit der Verzahnung (10) in Eingriff bringbar ist, während der Betätigungshebel (20) von der Gehäuseaußenseite her vom Benutzer in seine drei Stellungen bringbar ist.

17. Spannschloß nach Anspruch 16, **dadurch gekennzeichnet, daß** der Betätigungshebel (20) den Verrastungshebel (21), von der Gehäuseaußenseite her gesehen, bügelförmig überdeckt.

18. Spannschloß nach Anspruch 17, **dadurch gekennzeichnet, daß** beide Hebel (20,21) in ihrem Mittelbereich um eine Kippachse (22;24) verschwenkbar am Gehäuse (2a,2b) gelagert sind.

19. Spannschloß nach einem der Ansprüche 16 bis 18, **dadurch gekennzeichnet, daß** der Verrastungshebel (21) in die Eingriffsstellung seines Rastorgans (29) mit der Verzahnung (10) hin vorgespannt ist.

20. Spannschloß nach Anspruch 19, **dadurch gekennzeichnet, daß** der Betätigungshebel (20) auf seiner dem Verrastungshebel (21) zugewandten Seite zwei beidseits einer Kippachse (22) vorgesehene Vorsprünge (31,32) aufweist, mit deren einem der Verrastungshebel (21) in der Freigabestellung des Betätigungshebels (20) außer Eingriff mit der Verzahnung (10) verschwenkbar und mit deren anderem in der dritten Stellung des Betätigungshebels (20) der Verrastungshebel (21) in seiner Raststellung, in der das Rastorgan (29) in Eingriff mit der Verzahnung (10) steht, lageblockierbar ist.

21. Spannschloß nach einem der Ansprüche 16 bis 20, **dadurch gekennzeichnet, daß** der Betätigungshebel (20) eine Rasteinrichtung (33,35) aufweist, mit der er in jeder seiner Einstellpositionen mit dem Gehäuse (2a,2b,34) verrastbar ist.

22. Spannschloß nach Anspruch 21, **dadurch gekennzeichnet, daß** die Rasteinrichtung einen am Betätigungshebel (20) an dessen einem Ende angebrachten bogenförmig in Verschwenkrichtung in das Gehäuse (2a,2b) hinein vorspringenden Steg (31) aufweist, der mit Ausnehmungen (35) versehen ist, deren jede bei Erreichen einer vorgegebenen Kippstellung des Betätigungshebels (20) mit einer gehäusefesten Wulst (34) in lösbaren Rasteingriff gelangt.

23. Spannschloß nach einem der Ansprüche 1 bis 22, **dadurch gekennzeichnet, daß** der Spannstrang (3) ein flexibles, bevorzugt ein mit Kunststoff ummanteltes, Stahlseil ist.

## Claims

1. Tensioning device (1) for an antiskid chain, with a container (2a, 2b) that supports a control lever (20), which has a lock-in position, in which a tensioning cable (3), that is draggable by tensioning within the container (2a, 2b) through an opening of the container (4), is lockable in a direction opposite the tensioning direction thereof, has a release position, in which the tensioning cable (3) can be released from this lock, the tensioning cable (3) being connected within the container (2a, 2b) to a winding device (6, 9, 12) pretensioned in the rewinding direction, **characterised in that** the control lever (20) is further conveyable to a third position, in which it locks the tensioning cable (3) in both directions of the cable.

2. Tensioning device according to claim 1, **characterised in that** the winding device is a winding roller (6).

3. Tensioning device according to claim 2, **characterised in that** the winding roller (6) rests in a concentric manner on a preloading spring (12).

4. Tensioning device according to claim 3, **characterised in that** the preloading spring is a spiral spring (12).

5. Tensioning device according to claim 4, **characterised in that** the spiral spring is configured as a leaf spring (12) extending in the shape of a coil.

6. Tensioning device according to claim 3, **characterised in that** the preloading spring is a torsion spring.

7. Tensioning device according to claim 3, **characterised in that** the preloading spring is configured in the shape of a wound spiral spring.

8. Tensioning device according to any one of claims 2 to 7, **characterised in that** on the winding roller (6) there is applied laterally toothing (10) that is conveyable in a locking action in the lock-in position of the control lever (20) with a locking organ (29) applied to the latter or controlled by the latter.

9. Tensioning device according to claim 8, **characterised in that** the teeth (10) of the toothing are configured as saw teeth.

10. Tensioning device according to claim 8 or claim 9, **characterised in that** the winding roller (6) has a middle winding axle (7), that is laterally delimited by radially protruding side disks (8a, 8b).

11. Tensioning device according to claim 10, **characterised in that** the teeth (10) of the toothing are applied to one of the lateral disks of the sides (8b).

12. Tensioning device according to claim 10, **characterised in that** the toothing (10) is configured on a toothed wheel (9) applied next to the winding roller (6) in a coaxial manner to the latter.

13. Tensioning device according to any one of claims 1 to 9, **characterised in that** the winding roller (6) is provided with a shaped groove that rotates around a central axial region to guide axially the tensioning cable (3) wound around it.

14. Tensioning device according to claim 13, **characterised in that** the shaped groove is provided with lateral sides tilted in the shape of a V to one another in cross section.

15. Tensioning device according to any one of claims 1 to 14, **characterised in that** pretensioning of the winding device (6) is adjustable.

16. Tensioning device according to claim 1 together with any one of claims 8 to 12, **characterised in that** the control lever (20) cooperates with a locking lever (21) that is movable with respect thereto, wherein both the levers (20, 21) are housed on the container (2a, 2b) in a swingable manner and the locking lever (21) is provided with a locking member (29) with which it can be made to engage with the toothing (10) in a lock-in position, whilst the control lever (20) is movable by the user to the three positions thereof from the external side of the container.

17. Tensioning device according to claim 16, **characterised in that** the control lever (20) covers the locking lever (21) in an arch shape, as seen from the external side of the container.

18. Tensioning device according to claim 17, **characterised in that** in the central region both levers (20, 21) are housed on the container (2a, 2b) in a swingable manner around a tiltable axis (22, 24).

19. Tensioning device according to any one of claims 16 to 18, **characterised in that** the locking lever (21) is pretensioned in the engagement position of the locking member (29) thereof with the toothing (10).

20. Tensioning device according to claim 19, **characterised in that** the control lever (20) has, on the side facing the locking lever (21), two protrusions (31, 32) provided on both sides of a tilting axis (22), with one of which the locking lever (21) is swingable in the release position of the control lever (20) outside the engagement with the toothing (10) and with the other one of which, in the third position of the control lever (20), the locking lever (21) is lockable in the arrest position thereof, in which the locking member (29) is engaged with the toothing (10).

21. Tensioning device according to any one of claims 16 to 20, **characterised in that** the control lever (20) has a locking device (33, 35), with which it is lockable in each of the adjusting positions thereof with the container (2a, 2b, 34).

22. Tensioning device according to claim 21, **characterised in that** the locking device has a rib (31) protruding as an arch in the swinging direction inside the container (2a, 2b), applied to the control lever (20) on one of the ends of the latter, which is provided with recesses (35), each of which, when a preset tilting position of the control lever (20) is reached, reaches a removable locking device that engages with a reinforced edge (34) that is integral with the container.

23. Tensioning device according to any one of claims 1 to 22, **characterised in that** the tensioning cable (3) is a flexible steel cable that is preferably coated in plastic material.

## Revendications

1. Tendeur (1) de chaîne antidérapante avec un boîtier (2a, 2b) portant un levier d'actionnement (20), qui présente une position d'arrêt, dans laquelle une courroie tendeuse (3), pouvant être tendue en la tirant à l'intérieur du boîtier (2a, 2b) à travers une ouverture du boîtier (4), peut être bloquée dans le sens inverse à sa propre direction de tension, ainsi qu'une position de libération, dans laquelle la courroie tendeuse (3) peut être débloquée, étant ladite courroie tendeuse (3) reliée à l'intérieur du boîtier (2a, 2b) à un mécanisme d'enroulement (6, 9, 12) précontraint dans la direction d'enroulement, **caractérisé en ce que** le levier d'actionnement (20) peut en outre adopter une troisième position, dans laquelle il bloque la courroie tendeuse (3) dans les deux directions de la courroie.

2. Tendeur selon la revendication 1, **caractérisé en ce que** le mécanisme d'enroulement est un galet enrouleur (6).

3. Tendeur selon la revendication 2, **caractérisé en ce que** le galet enrouleur (6) repose de manière concentrique sur un ressort de précontrainte (12).

4. Tendeur selon la revendication 3, **caractérisé en ce que** le ressort de précontrainte est un ressort à boudin (12).

5. Tendeur selon la revendication 4, **caractérisé en ce que** le ressort à boudin est configuré sous forme d'un ressort à lames (12) qui s'allonge en forme de spirale.

6. Tendeur selon la revendication 3, **caractérisé en ce que** le ressort de précontrainte est un ressort de torsion.

7. Tendeur selon la revendication 3, **caractérisé en ce que** le ressort de précontrainte est fait en forme d'un ressort de flexion à boudin.

8. Tendeur selon l'une quelconque des revendications de 2 à 7, **caractérisé en ce que** le galet enrouleur (6) est muni sur le côté d'une denture (10), qui peut adopter, en engagement de blocage, la position d'arrêt du levier d'actionnement (20) par le biais d'une pièce de butée (29) placée sur celui-ci ou commandée par celui-ci.

9. Tendeur selon la revendication 8, **caractérisé en ce que** les dents (10) de la denture sont faites en forme de dents de scie.

10. Tendeur selon l'une quelconque des revendications 8 ou 9, **caractérisé en ce que** le galet enrouleur (6) présente un axe d'enroulement central (7), qui est délimité sur les côtés par des disques des flancs (8a, 8 b) en saillie radiale.

11. Tendeur selon la revendication 10, **caractérisé en ce que** les dents (10) de la denture sont placées sur l'un des disques latéraux des flancs (8b).

12. Tendeur selon la revendication 10, **caractérisé en ce que** la denture (10) est faite sur une roue dentée (9), placée à côté du galet enrouleur (6) de manière coaxiale à celui-ci.

13. Tendeur selon l'une quelconque des revendications de 1 à 9, **caractérisé en ce que** le galet enrouleur (6) est muni d'une rainure façonnée qui fait le tour de sa partie axiale centrale pour faire coulisser axialement la courroie tendeuse (3) qui s'enroule sur celle-ci.

14. Tendeur selon la revendication 13, **caractérisé en ce que** la rainure façonnée est munie de flancs latéraux inclinés en forme de V l'un par rapport à l'autre en section transversale.

15. Tendeur selon l'une quelconque des revendications de 1 à 14, **caractérisé en ce que** la précontrainte du mécanisme d'enroulement (6) peut être réglée.

16. Tendeur selon la revendication 1 prise en combinaison avec l'une quelconque des revendications de 8 à 12, **caractérisé en ce que** le levier d'actionnement (20) travaille en coopération avec un levier de blocage (21) mobile par rapport à celui-ci, étant les deux leviers (20, 21) logés de manière orientable sur le boîtier (2a, 2b) et le levier de blocage (21) muni d'une pièce de butée (29) qui permet d'engager celui-ci dans la denture (10) dans une position d'arrêt, alors que l'utilisateur peut mettre le levier d'actionnement (20) dans ses trois positions à partir du côté externe du boîtier.

17. Tendeur selon la revendication 16, **caractérisé en ce qu'**observé depuis le côté externe du boîtier, le levier d'actionnement (20) couvre le levier de blocage (21) en formant un arc.

18. Tendeur selon la revendication 17, **caractérisé en ce que** les deux leviers (20, 21) sont logés sur le boîtier (2a, 2b) de manière orientable autour d'un axe de basculement (22, 24) dans leur partie centrale.

19. Tendeur selon l'une quelconque des revendications de 16 à 18, **caractérisé en ce que** le levier de blocage (21) est précontraint dans la position d'engagement de sa pièce de butée (29) dans la denture (10).

20. Tendeur selon la revendication 19, **caractérisé en ce que** le levier d'actionnement (20) présente, sur son propre côté dirigé vers le levier de blocage (21), deux saillies (31, 32) prévues de part et d'autre d'un axe de basculement (22) ; l'une des deux saillies permet d'orienter le levier de blocage (21) dans la position de libération du levier d'actionnement (20) en le dégageant de la denture (10) et l'autre saillie permet, dans la troisième position du levier d'actionnement (20), de bloquer le levier de blocage (21) dans sa position d'arrêt, dans laquelle la pièce de butée (29) est engagée dans la denture (10).

21. Tendeur selon l'une quelconque des revendications de 16 à 20, **caractérisé en ce que** le levier d'actionnement (20) présente un mécanisme de butée (33, 35), qui permet de bloquer celui-ci dans chacune de ses positions de réglage avec le boîtier (2a, 2b, 34).

22. Tendeur selon la revendication 21, **caractérisé en ce que** le mécanisme de butée présente une nervure (31) saillante en forme d'arc dans la direction d'orientation à l'intérieur du boîtier (2a , 2b), placée sur l'une des extrémités du levier d'actionnement (20) muni de renfoncements (35) qui, dans une position de basculement du levier d'actionnement(20) préfixée, sont engagés chacun dans une position d'arrêt amovible dans un bourrelet (34) solidaire du boîtier.

23. Tendeur selon l'une quelconque des revendications de 1 à 22, **caractérisé en ce que** la courroie tendeuse (3) est une corde flexible en acier, recouverte de préférence de matière plastique.
